# EUROPEAN PATENT APPLICATION

(11) **EP 3 878 646 A1**
(43) Date of publication of application: **15.09.2021**
(21) Application number: 21162344.2
(22) Date of filing: 12.03.2021
(51) Int. Cl.: B32B 7/027, B32B 7/12, B32B 15/08, B32B 15/098, B32B 15/10, B32B 15/20, B32B 21/02, B32B 21/04, B32B 21/14, B32B 3/12, A62C 3/08, B64C 1/06

(54) **LOW HEAT RELEASE VENEER PRODUCT FOR AIRCRAFT INTERIOR COMPONENTS**

(30) Priority: 13.03.2020 US 202016818812
(71) Applicant: Goodrich Corporation, Charlotte, NC 28217-4578 (US)
(72) Inventor: CHAPMAN, Christopher L., Georgetown, IN 47122 (US); BARNETT, Brian K., New Albany, IN 47150 (US)
(74) Representative: Dehns

(57) **Abstract**

A low heat release veneer product for aircraft interior components may include at least one substrate layer (120), at least one thermally-conductive layer (104) disposed on the at least one substrate layer (102), at least one veneer layer disposed on the at least one thermally-conductive layer, and at least one coating disposed on the at least one veneer layer (108). One or more of the at least one substrate layer, the at least one thermally-conductive layer, the at least one veneer layer, or the at least one coating may be compliant with an OSU 65/65 rate of heat release test.

## Description

### BACKGROUND

Aircraft interior components such as decorative panels are subject to specific aviation guidelines and/or standards. The installation of the aircraft interior components may be limited to select aircraft, depending on whether the aviation guidelines and/or standards will be met by the design parameters of the aircraft interior components.

### SUMMARY

A low heat release veneer product for aircraft interior components is disclosed, in accordance with one or more embodiments of the disclosure. The veneer product may include at least one substrate layer. The veneer product may include at least one thermally-conductive layer disposed on the at least one substrate layer. The veneer product may include at least one veneer layer disposed on the at least one thermally-conductive layer. The veneer product may include at least one coating disposed on the at least one veneer layer. One or more of the at least one substrate layer, the at least one thermally-conductive layer, the at least one veneer layer, or the at least one coating may be compliant with an OSU 65/65 rate of heat release test.

In some embodiments, one or more of the at least one substrate layer, the at least one thermally-conductive layer, the at least one veneer layer, or the at least one veneer layer may be configured to prevent the low heat release veneer product from releasing 65 (kW*min)/m² in total after two minutes of heat release and having a peak 65 (kW)/m² release within a five-minute period of heat release

In some embodiments, each of the at least one substrate layer, the at least one thermally-conductive layer, the at least one veneer layer, and the at least one veneer layer may be compliant with the OSU 65/65 rate of heat release test.

In some embodiments, the at least one substrate layer may include at least one of a honeycomb or lattice structure, a raw product structure, or a fabricated composite structure.

In some embodiments, the at least one substrate layer being fabricated from at least one of a phenolic resin, a raw wood product, or a composite product.

In some embodiments, the at least one thermally-conductive layer may include at least one aluminum layer.

In some embodiments, the veneer product may include at least one adhesive layer positioned between the at least one substrate layer and the at least one thermally-conductive layer.

In some embodiments, the at least one adhesive layer may be position between the at least one substrate layer and the at least one thermally-conductive layer and the at least one veneer layer may be fire retardant.

In some embodiments, the at least one veneer layer may be cut from natural lumber.

In some embodiments, the at least one veneer layer may be a composite veneer layer fabricated from a mixture including raw wood product and a binder.

In some embodiments, the veneer product may include at least one adhesive layer positioned between the at least one thermally-conductive layer and the at least one veneer layer.

In some embodiments, the at least one adhesive layer may be position between the at least one thermally-conductive layer and the at least one veneer layer being fire retardant

In some embodiments, the at least one coating may be transparent.

In some embodiments, the at least one coating may include an intumescent material.

An aircraft is disclosed, in accordance with one or more embodiments of the disclosure. The aircraft may include at least one aircraft interior component. The at least one aircraft interior component may include a low heat release veneer product. The low heat release veneer product may include at least one substrate layer. The low heat release veneer product may include at least one thermally-conductive layer disposed on the at least one substrate layer. The low heat release veneer product may include at least one veneer layer disposed on the at least one thermally-conductive layer. The low heat release veneer product may include at least one coating disposed on the at least one veneer layer. One or more of the at least one substrate layer, the at least one thermally-conductive layer, the at least one veneer layer, or the at least one coating may be compliant with an OSU 65/65 rate of heat release test.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a side exploded view of a low heat release veneer product for aircraft interior components, in accordance with one or more embodiments of the disclosure;
FIG. 1B illustrates a side view of a low heat release veneer product for aircraft interior components, in accordance with one or more embodiments of the disclosure;
FIG. 1C illustrates a perspective view of a low heat release veneer product for aircraft interior components, in accordance with one or more embodiments of the disclosure;
FIG. 2A illustrates a graph including tests of conventional non-low heat release veneer products for aircraft interior components, in accordance with one or more embodiments of the disclosure;
FIG. 2B illustrates a table including test data of conventional non-low heat release veneer products for aircraft interior components, in accordance with one or more embodiments of the disclosure;
FIG. 3A illustrates a graph including tests of low heat release veneer products for aircraft interior components, in accordance with one or more embodiments of the disclosure;
FIG. 3B illustrates a table including test data of low heat release veneer products for aircraft interior components, in accordance with one or more embodiments of the disclosure; and
FIG. 4 illustrates an interior of an aircraft, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

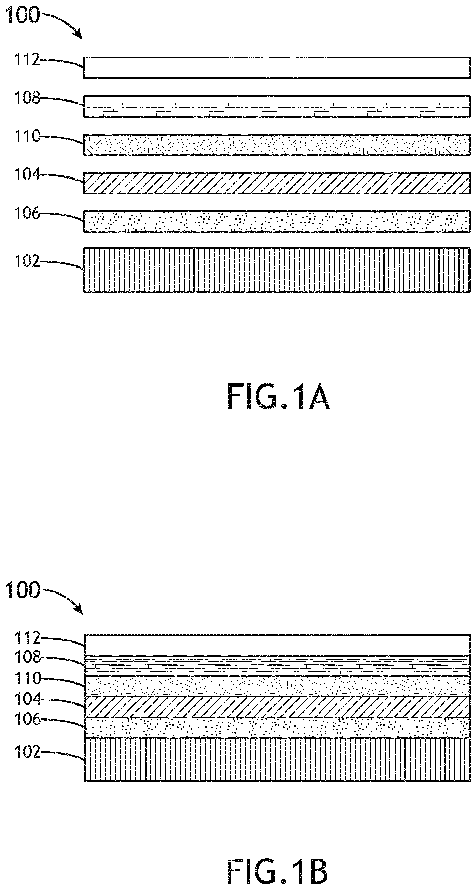

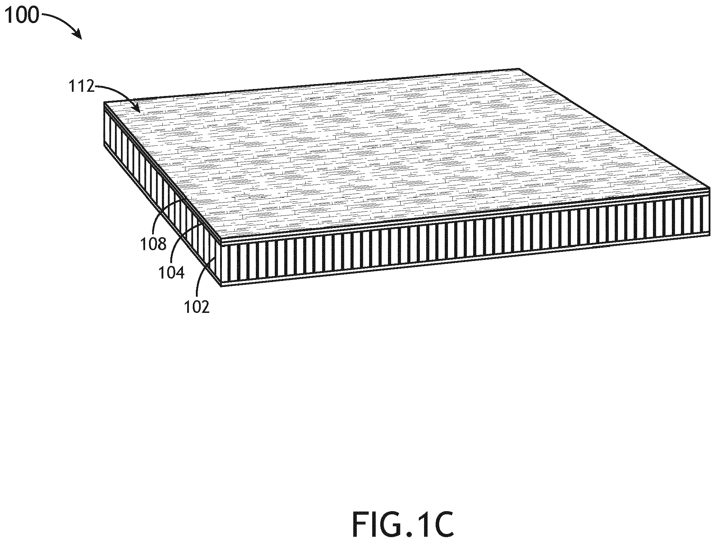

FIGS. 1A-4 generally illustrate a low heat release veneer product for aircraft interior components, in accordance with one or more embodiments of the disclosure.

Aircraft interior components such as decorative panels are subject to specific aviation guidelines and/or standards. The aviation guidelines and/or standards may be put forth by the Federal Aviation Administration (FAA) (e.g., and codified in the Code of Federal Regulations (CFR)), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

For example, 14 C.F.R. Part 25, *AIRWORTHINESS STANDARDS: TRANSPORT CATEGORY AIRPLANES,* includes 14 C.F.R. § 25.853, *Compartment Interiors,* 14 C.F.R. § 25.855, *Cargo or baggage compartments,* and corresponding Appendix F includes guidelines for heat release by aircraft interior components installed within an aircraft when exposed to a level of radiant heat (e.g., during normal operation, during an emergency such as an onboard fire, or the like). For instance, one heat release standard is the Ohio State University (OSU) calorimeter standard.

The installation of the aircraft interior components may be limited to select aircraft, depending on whether the aviation guidelines and/or standards will be met by the design parameters of the aircraft interior components. For example, for aircraft configured to carry 20 or more passengers, the FAA guidelines require installed aircraft interior components to meet or exceed the OSU 65/65 rate of heat release test, which measures caloric value output of burnable materials.

Under the OSU 65/65 rate of heat release test, a maximum acceptable two minutes total heat release (HR) of amount of heat energy evolved as 65 kilowatts-minute per square meter (or 65 (kW*min)/m²) is allowable, and a maximum acceptable Heat Release Rate (HRR) (e.g., peak HRR, or PHR) of heat energy evolved as 65 kilowatt per square meter (or 65 kW/m²) is allowable. Measurements may be taken at a two-minute mark and at a five-minute mark; to meet the OSU 65/65 rate of heat release test, all materials need to be kept under the allowable values for the entire five-minute period.

In general, wood veneer products (e.g., veneer decorative panels; veneer tables or work surfaces; veneer panels for suite dividers, bulkheads, or galleys; or the like) are not installed on aircraft configured to carry 20 or more passengers, due to the inability of the veneer products to meet or exceed the OSU 65/65 rate of heat release test. Instead, products configured to imitate the appearance of wood veneer products (e.g., painted products, laminated products, hydrodipped products, or the like) may be installed within aircraft configured to carry 20 or more passengers.

As such, it would be desirable to provide a low heat release veneer product for aircraft interior components capable of meeting or exceeding the OSU 65/65 rate of heat release test, allowing aircraft interior components including the low heat release veneer product to be installed on aircraft configured to carry 20 or more passengers.

FIGS. 1A-1C illustrate a low heat release veneer product 100 for aircraft interior components, in accordance with one or more embodiments of the disclosure. It is noted herein that the term "low heat release veneer product 100" and variants of the term "low heat release veneer product 100" (e.g., "veneer product 100", or the like) may be considered equivalent for purposes of the disclosure.

Reducing a heat release rate may require addressing at least one of the fuel side, the oxygen side, and/or the combustion side of the fire triangle. At least some of the various layers of the veneer product 100 may be selected to address at least one of the three sides of the fire triangle.

The veneer product 100 may include one or more substrate layers 102. The one or more substrate layers 102 may be fabricated from a resin, plastic, metal, wood, or other material. For example, the resin may include, but is not limited to, a phenol formaldehyde (or phenolic) resin (e.g., a thermosetting resin or plastic made by condensation of a phenol with an aldehyde). By way of another example, the resin may include, but is not limited to, an epoxy-based resin.

The one or more substrate layers 102 may include a honeycomb structure or a lattice structure. For example, the honeycomb structure may be vertically-oriented (e.g., oriented parallel or substantially parallel to an axis of the direction of build of the veneer product 100). By way of another example, the honeycomb structure may be horizontally-oriented (e.g., oriented perpendicular or substantially perpendicular to the axis of the direction of build of the veneer product 100). By way of another example, the honeycomb structure may be set at an angle relative to the axis of the direction of build of the veneer product 100. The one or more substrate layers 102 may be a solid structure or nearly-solid structure. In general, the one or more substrate layers 102 may include any number of honeycomb or lattice structures, raw product structures, and/or fabricated composite structures within an aircraft.

The one or more substrate layers 102 may be a board cut from raw product (e.g., raw wood product) or a fabricated composite board fabricated from composite product, where the raw product or fabricated composite board includes natural cavities and/or non-material artificially-generated cavities. In general, the one or more substrate layers 102 may be fabricated from any material configured to be compliant with the OSU 65/65 rate of heat release test.

It is noted herein the one or more substrate layers 102 may be fabricated from some combination of the above examples. Therefore, the description should not be interpreted as a limitation on the scope of the disclosure but merely an illustration.

The one or more substrate layers 102 may be fabricated from a material compliant with the OSU 65/65 rate of heat release test and/or may be coated with a material compliant with the OSU 65/65 rate of heat release test. For example, the one or more substrate layers 102 may include or be coated (e.g., be chemically treated) with a selected fire-resistant and/or fire-retardant material or chemical configured to burn off oxygen, to address the oxygen side of the fire triangle.

The veneer product 100 may include one or more thermally-conductive layers 104. The one or more thermally-conductive layers 104 may be fabricated from a metal, a metalloid, and/or a non-metal. For example, the metal, a metalloid, and/or a non-metal may include, but are not limited to, an elemental metal, metalloid, or non-metal layer; a metal compound, a metalloid compound, or non-metal compound layer; or the like. For instance, the metal, metalloid, or non-metal may include an aluminum layer, a copper layer, a graphite layer, or other metal, metalloid, or non-metal layer. The one or more thermally-conductive layers 104 may be positioned or disposed on the one or more substrate layers 102 along the axis of the direction of build in the veneer product 100.

The one or more thermally-conductive layers 104 may be fabricated from a material compliant with the OSU 65/65 rate of heat release test and/or may be coated with a material compliant with the OSU 65/65 rate of heat release test, where the material may be selected to address the heat side of the fire triangle by drawing heat away from the heat source (e.g., the open flame) to reduce damage being done. For example, the one or more thermally-conductive layers 104 may include an aluminum layer By way of another example, the one or more thermally-conductive layers 104 may include a first sublayer or central layer of a first metal, metalloid, or non-metal and at least a second sublayer layer or plating layer of at least a second metal, metalloid, or non-metal.

It is noted herein the one or more thermally-conductive layers 104 may be configured to be a secondary substrate for the veneer product 100, in addition to the one or more substrate layers 102). For example, where the one or more thermally-conductive layers 104 includes an aluminum layer, the aluminum layer may have a thickness ranging from 0.005 inches to 0.025 inches. An aluminum layer having this range of thickness may provide sufficient thermal conductivity of a heat source and slow a rate of heat release. In contrast, most veneer products do not include a thermally-conductive substrate only include a thinner aluminum (e.g., ranging from 0.001 inches to 0.003 inches, as found in products intended to pass only the FAR 12/60 rate of heat release test, as described below), which may not result in passing the OSU 65/65 rate of heat release test. Therefore, the description should not be interpreted as a limitation on the scope of the disclosure but merely an illustration.

The veneer product 100 may include one or more adhesive layers 106. For example, the one or more adhesive layers 106 may include, but are not limited to, a contact adhesive (e.g., a contact cement, or the like). By way of another example, the one or more adhesive layers 106 may include, but are not limited to, a fire-resistant and/orfire-retardant adhesive film. The one or more adhesive layers 106 may be positioned between the one or more substrate layers 102 and the one or more thermally-conductive layers 104.

The one or more adhesive layers 106 may be fabricated with a material compliant with the OSU 65/65 rate of heat release test. For example, the one or more structural adhesive layers 106 may include or be coated (e.g., be chemically treated) with a selected fire-resistant and/or fire-retardant material or chemical configured to burn off oxygen, to address the oxygen side of the fire triangle.

The veneer product 100 may include one or more veneer layers 108. The one or more veneer layers 108 may include a particular wood color, design, grain width, and/or grain pattern. The one or more veneer layers 108 may be positioned or disposed on the one or more thermally-conductive layers 104 along the axis of the direction of build in the veneer product 100. At least some of the one or more veneer layers 108 may be cut from natural lumber. At least some of the one or more veneer layers 108 may be a composite veneer layer fabricated from a mixture.

The mixture may include wood product from one or more sources of raw wood material. For example, the raw wood material may include, but is not limited to, sawdust, wood shavings, wood pulp, or other wood product. By way of another example, the raw wood material may be generated from one or more different species of trees.

The mixture may include a binder (or binding agent). For example, the binder may include, but is not limited to, a thermoplastic, an adhesive, and/or water. For instance, the adhesive may include, but is not limited to, an epoxy resin, a wood glue, or other adhesive suitable for use with wood. The epoxy resin may include a clear epoxy resin that is not visible in the stack of lumber once dry. It is noted herein the use of an epoxy resin may allow for the color of the sheets of veneer to be replicated throughout the stack of lumber, without concern of unwanted color (e.g., a white or yellow layer). In addition, it is noted herein the epoxy resin may be a two-part epoxy resin. The adhesive may be in a powder, particle, and/or particulate form to mix with the wood product.

Where the one or more veneer layers 108 are fabricated from a mixture, the one or more veneer layers 108 may include a material selected to generate the particular wood color, design, grain width, and/or grain pattern. For example, the material may include the raw wood product. By way of another example, the material may include a dyed water-based material. By way of another example, the material may include a thermal-sensitive material. For instance, the thermal-sensitive material may be configured to activate (e.g., in the presence of heat) and generate the particular color, design, grain width, and/or grain pattern. The dyed water-based material and/or thermal-sensitive material may be in a powder, particle, and/or particulate form to mix with the wood product.

Where the one or more veneer layers 108 are fabricated from a mixture, the one or more veneer layers 108 may include a fire-resistant and/or fire-retardant material. For example, the fire-resistant and/or fire-retardant material may include, but is not limited to, metal powder, metal particles, metal shavings, or other metal product. By way of another example, the fire-resistant and/or fire-retardant material may include, but is not limited to, a concrete, a silicate (e.g., a material with a chemical compound including SiO₂ structures), or another material with one or more fire-resistant and/or fire-retardant properties.

The one or more veneer layers 108 may be fabricated from a material compliant with the OSU 65/65 rate of heat release test and/or may be coated with a material compliant with the OSU 65/65 rate of heat release test. For example, the one or more veneer layers 108 may include or be coated (e.g., be chemically treated) with a selected fire-resistant and/or fire-retardant material or chemical configured to burn off oxygen, to address the oxygen side of the fire triangle.

The veneer product 100 may include one or more adhesive layers 110. For example, the one or more adhesive layers 110 may include a fire-resistant and/or fire-retardant adhesive film. The one or more adhesive layers 110 may be positioned between the one or more thermally-conductive layers 104 and the one or more veneer layers 108.

The one or more adhesive layers 110 may be fabricated with a material compliant with the OSU 65/65 rate of heat release test and/or may be coated with a material compliant with the OSU 65/65 rate of heat release test. For example, the one or more adhesive layers 110 may include or be coated (e.g., be chemically treated) with a selected fire-resistant and/or fire-retardant material or chemical configured to burn off oxygen, to address the oxygen side of the fire triangle.

The veneer product 100 may include one or more coatings 112. The one or more coatings 112 may be applied to (or disposed on) the one or more veneer layers 108. The one or more coatings 112 may be transparent or translucent, allowing the particular wood color, design, grain width, and/or grain pattern of the one or more veneer layers 108 to be visible through the one or more coatings 112. It is noted herein, however, that the one or more coatings 112 may be opaque and configured to generate the particular wood color, design, grain width, and/or grain pattern. Therefore, the description should not be interpreted as a limitation on the scope of the disclosure but merely an illustration.

The one or more coatings 112 may include a mixture of material compliant with the OSU 65/65 rate of heat release test. For example, the one or more coatings 112 may include an intumescent material (e.g., a compound or mixture) configured to swell as a result of heat exposure to increase volume and decrease density, to address the fuel side of the fire triangle. For instance, the one or more coatings 112 may include, but is not limited to, melamine chemicals, acids, liquid carriers, U/V inhibitors, and/or catalysts that, when combined, may produce desired intumescent properties that meet the conditions of the OSU 65/65 rate of heat release test.

In this regard, the one or more coatings 112, along with the one or more layers 102, 104, 106, 108, 110, may reduce the overall heat release value of the entire veneer product 100 while allowing the veneer product 100 to retain a desired aesthetic appearance, in contrast to known coatings in use. Without the one or more coatings 112 as described throughout the disclosure, the veneer product 100 may not be configured to pass the OSU 65/65 rate of heat release test. Similarly, without the one or more layers 102, 104, 106, 108, 110 as described throughout the disclosure, the veneer product 100 may not be configured to pass the OSU 65/65 rate of heat release test.

However, it is noted herein the description should not be interpreted as a limitation on the scope of the disclosure but merely an illustration. Although embodiments of the present disclosure illustrate the veneer product 100 as including the one or more layers 102, 104, 106, 108, 110 and the one or more coatings 112, it is noted herein the veneer product 100 is not limited to the layers as illustrated in FIGS. 1A-1C, to the extent the remaining veneer product 100 build is still able to pass the OSU 65/65 rate of heat release test. For example, the veneer product 100 may include more or fewer layers and/or coatings than those illustrated in FIGS. 1A-1C, to the extent the remaining veneer product 100 build is still able to pass the OSU 65/65 rate of heat release test. By way of another example, the veneer product 100 may include the layers and/or coatings of the veneer product 100 in a different order than those illustrated in FIGS. 1A-1C, to the extent the remaining veneer product 100 build is still able to pass the OSU 65/65 rate of heat release test. By way of another example, at least one of the layers and/or coatings of the veneer product 100 may be of a same thickness or of a different thickness than the other layers and/or coatings of the veneer product 100 as illustrated in FIGS. 1A-1C, to the extent the remaining veneer product 100 build is still able to pass the OSU 65/65 rate of heat release test.

The testing of the veneer product 100 to ensure compliancy with the OSU 65/65 rate of heat release test may include one or more of the following steps. It is noted herein the test apparatus may be configured at least in part based on guidelines set forth by 14 C.F.R. Part 25, *AIRWORTHINESS STANDARDS: TRANSPORT CATEGORY AIRPLANES* including 14 CFR § 25.853, *Compartment Interiors* and corresponding Appendix F.

In a step, one or more samples of the veneer product 100 and/or materials used in the fabrication of the one or more samples of the veneer product 100 may be pre-conditioned prior to the test for a select period of time, at a select temperature, and at a select humidity. For example, the one or more samples may be conditioned for at least 24 hours at 70 degrees Fahrenheit (°F) at 50% humidity.

In a step, the one or more samples of a select size may be fabricated by wrapping the backside and edges with a mold. For example, the mold may be fabricated from, but is not limited to, aluminum foil. By way of another example, three samples may be fabricated. By way of another example, 6-inch x 6-inch samples may be fabricated. The mold may be removed from a face side, where the face side will be positioned proximate to a flame source.

In a step, the one or more samples may be placed in a holding chamber of a test apparatus for a select period of time to be conditioned in a select temperature and a select humidity. For example, the one or more samples may be transferred via an injection mechanism slid through an outer door of the holding chamber. For instance, the outer door may be sealed and/or hinged. By way of another example, the select period of time may be 60 seconds (s) and the select temperature and humidity may be ambient temperature and ambient humidity.

In a step, the one or more samples may be transferred from the holding chamber to an environmental chamber of the test apparatus and positioned a select distance from an open flame. For example, the one or more samples may be transferred via the injection mechanism slid through the holding chamber and a two-part hinged insulation radiation door assembly. For instance, the environmental chamber may include one or more of radiant heating elements, a reflector plate, a diamond shaped mask, upper pilot burners, lower pilot burners, air distributor plates, cold zone thermocouples (e.g., thermopiles), a two-part hinged insulated radiation door assembly, and/or a heat resistant viewing window. By way of another example, the one or more samples may be positioned within 10 millimeters (mm) from an open flame. Once the one or more samples are positioned the select distance from the open flame, a five-minute timer may be started.

In a step, a heat release (HR) recording may be taken at exactly a two-minute mark for each of the one or more samples. It is noted herein the two-minute HR recording may not exceed 65 (kW*min)/m² to meet the OSU 65/65 rate of heat release test.

In a step, a Heat Release Rate (HRR) peak temperature (e.g., peak HRR, or PHR) achieved during the burning process may be recorded for each of the one or more samples. The HRR may peak more than once, but only the highest HRR peak and time of peak will be recorded during the five-minute duration. It is noted herein the highest HRR peak may not exceed 65 (kW)/m² to meet the OSU 65/65 rate of heat release test.

In a step, the average for the two-minute HR recording and the HRR peak recording of the three samples may be calculated, to determine whether the veneer product 100 may meet the OSU 65/65 rate of heat release test.

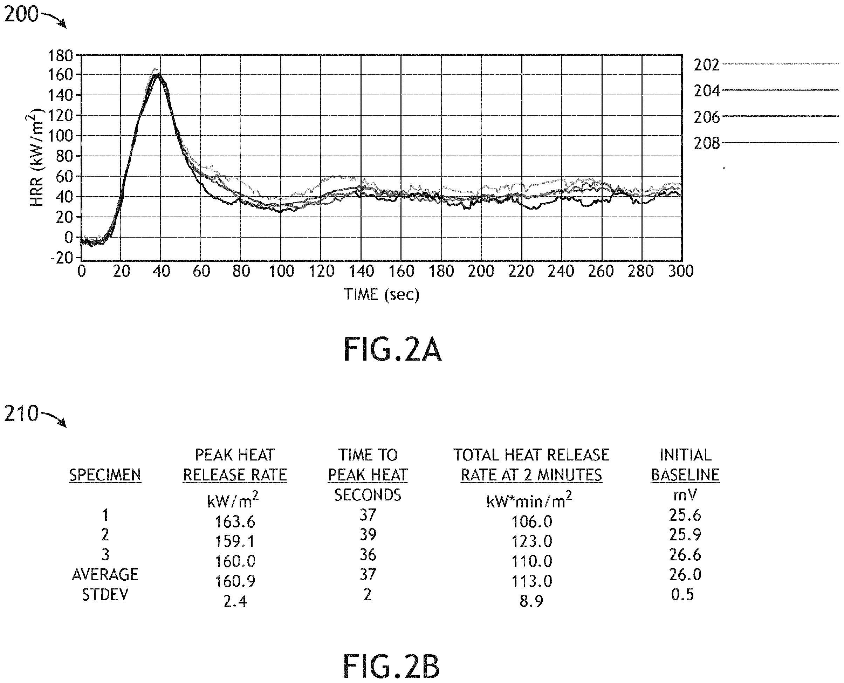

FIGS. 2A and 2B in general illustrate tests for conventional non-low heat release veneer products, in accordance with one or more embodiments of the disclosure.

In a graph 200 as illustrated in FIG. 2A and a data table 210 as illustrated in FIG. 2B, test runs 202, 204, 206 for a conventional non-low heat release veneer product were performed, for which an average 208 was determined. For example, the conventional non-low heat release veneer product may have one or more differences from the low heat release veneer product 100, where the differences may include, but are not limited to, not including one or more thermally-conductive layers 104 having a correct thickness, not being coated with the one or more coatings 112, or the like.

As illustrated in the graph 200 and the data table 310, the conventional non-low heat release veneer product is not capable of meeting or exceeding the OSU 65/65 rate of heat release test, as previously described herein. For example, the conventional non-low heat release veneer product may have a peak Heat Release Rate (HRR) (e.g., peak HRR, or PHR) of nearly 140 kW/m² at approximately 40 seconds into the test, which fails both the two-minute and five-minute requirements of the OSU 65/65 rate of heat release test.

It is noted herein that when the correct protection and HRR mitigations are not in place with the conventional non-low heat release veneer product of FIGS. 2A and 2B, the open flame will hit the conventional non-low heat release veneer product and all components ignite will quickly and aggressively ignite, resulting in a shift in PHR to the left representing how the quick release of calorie values peaks high and fails early in the test as the flame penetrates and burns a hole through all layers.

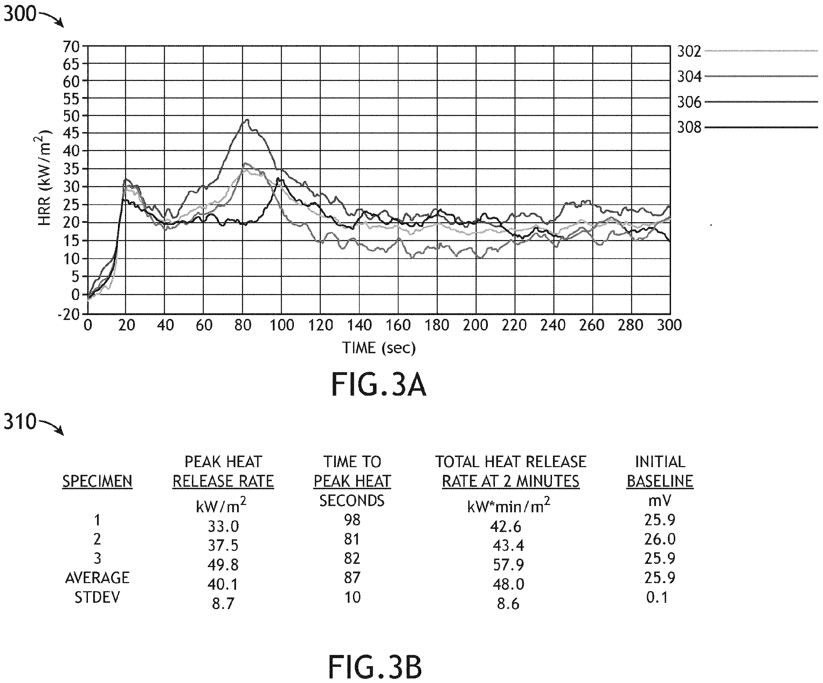

FIGS. 3A and 3B in general illustrate tests for non-low heat release veneer products, in accordance with one or more embodiments of the disclosure.

In a graph 300 as illustrated in FIG. 3A and a data table 310 as illustrated in FIG. 3B, test runs 302, 304, 306 for a low heat release veneer product 100 were performed, for which an average 308 was determined. For example, the low heat release veneer product 100 may have a build as described throughout the disclosure.

As illustrated in the graph 300 and the data table 310, the low heat release veneer product 100 is capable of meeting or exceeding the OSU 65/65 rate of heat release test, as previously described herein.

It is noted herein that when the correct protection and HRR mitigations are in place with the low heat release veneer product 100 of FIGS. 3A and 3B, the layers work in conjunction to slow down the flame penetration, to slow down the calorie release, and to slow down the entire destruction process from the flame, resulting in a shift in PHR to the right.

In comparing the two sets of tests as illustrated in FIGS. 2A-2B and 3A-3B, then, it may be seen the build of the low heat release veneer product 100 as described through the disclosure is capable of meeting the OSU 65/65 rate of heat release test, as compared to more conventional non-low heat release veneer products.

It is noted herein the test apparatus may include a pyramidal section coupled to the environmental chamber. For example, the pyramidal section may include one or more of a chimney or exhaust stack, a cooling manifold (e.g., that releases constant temperature air between two inner and outer cone sections), and/or a baffle plate (e.g., hot zone thermocouples that facilitate mixing of air as it exits the chimney).

It is noted herein that one or more parameters of the test (e.g., preconditioning time, temperature, and/or humidity; conditioning time, temperature, and/or humidity; position proximate to the open flame; or other parameters of the test) may be deviated from without affecting the outcome or integrity of the test. As such, the test is not limited to the parameters as described above. Therefore, the description should not be interpreted as a limitation on the scope of the disclosure but merely an illustration.

It is noted herein the test process is not limited to the steps and/or sub-steps provided. For example, the test process may include more or fewer steps and/or sub-steps. In addition, the test process may perform the steps and/or sub-steps simultaneously. Further, the test process may perform the steps and/or sub-steps sequentially, including in the order provided or an order other than provided. Therefore, the above description should not be interpreted as a limitation on the scope of the disclosure but merely an illustration.

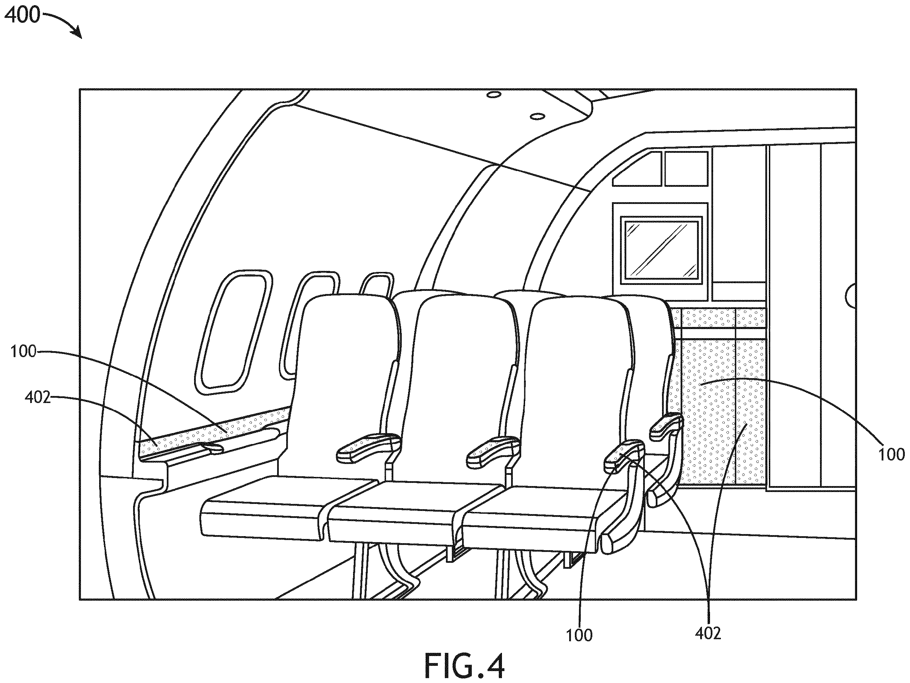

FIG. 4 illustrates an interior of an aircraft 400, in accordance with one or more embodiments of the disclosure.

The aircraft 200 may include one or more aircraft interior components 402. For example, the one or more aircraft interior components 402 may include, but are not limited to, veneer decorative panels; veneer tables or work surfaces; veneer panels for suite dividers, bulkheads, or galleys; or the like. At least some of the one or more aircraft interior components 402 may be covered at least in part with the veneer product 100.

In this regard, the disclosure is directed to a low heat release veneer product for aircraft interior components capable of meeting or exceeding the OSU 65/65 rate of heat release test, allowing aircraft interior components including the low heat release veneer product to be installed on aircraft configured to carry 20 or more passengers. It is noted herein the veneer product 100 may address all three sides of the fire triangle (e.g., oxygen, fuel, and combustion), as opposed to addressing only a subset of the three sides (e.g., addressing only the oxygen side of the fire triangle.

Although embodiments of the disclosure are directed to meeting or exceeding the OSU 65/65 rate of heat release test in place for aircraft configured to carry 20 or more passengers, it is noted herein the veneer product 100 may be capable of meeting or exceeding other tests. For example, 14 C.F.R. Part 25, *AIRWORTHINESS STANDARDS: TRANSPORT CATEGORY AIRPLANES,* includes 14 C.F.R. § 25.853, *Compartment Interiors,* 14 C.F.R. § 25.855, *Cargo or baggage compartments,* and corresponding Appendix F includes guidelines for flame requirements that a material cannot exceed to be installed within an aircraft for installation in aircraft configured to carry 19 or fewer passengers. For instance, one test is the FAR 25.853 burn test for cabin and compartment materials, where a flame may be applied to cabin and compartment materials in either a 12-second interval or a 60-second interval (e.g., the FAR 12/60 burn test). In this regard, the veneer product 100 may also be suitable for installation in aircraft configured to carry 19 or fewer passengers. Therefore, the description should not be interpreted as a limitation on the scope of the disclosure but merely an illustration.

Although embodiments of the disclosure are directed to using the veneer product 100 in an aircraft configured to carry 20 or more passengers, it is noted herein the veneer product 100 is not limited to aircraft. For example, the veneer product 100 may be used in any vehicle. For instance, the vehicle may be any air, space, land, or water-based personal equipment or vehicle; any air, space, land, or water-based commercial or industrial equipment or vehicle; any air, space, land, or water-based military equipment or vehicle; or the like. By way of another example, the veneer product 100 may be used in as part of a structure or a component configured to be installed within, housed within, or attached to a structure. For instance, the structure may include, but is not limited to, a residential establishment (e.g., a house, an apartment, or the like), a commercial or industrial establishment (e.g., an office building, a storage building, or the like), a military establishment, or the like. Therefore, the description should not be interpreted as a limitation on the scope of the disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A low heat release veneer product (100) for aircraft interior components, comprising:
at least one substrate layer (102);
at least one thermally-conductive layer (104) disposed on the at least one substrate layer;
at least one veneer layer (108) disposed on the at least one thermally-conductive layer; and
at least one coating disposed on the at least one veneer layer,
one or more of the at least one substrate layer (120), the at least one thermally-conductive layer (104), the at least one veneer layer (108), or the at least one coating being compliant with an OSU 65/65 rate of heat release test.

2. The veneer product of Claim 1, one or more of the at least one substrate layer, the at least one thermally-conductive layer, the at least one veneer layer, or the at least one veneer layer being configured to prevent the low heat release veneer product from releasing 65 (kW*min)/m² in total after two minutes of heat release and having a peak 65 (kW)/m² release within a five-minute period of heat release.

3. The veneer product of Claim 1 or 2, each of the at least one substrate layer, the at least one thermally-conductive layer, the at least one veneer layer, and the at least one veneer layer being compliant with the OSU 65/65 rate of heat release test.

4. The veneer product of any preceding Claim, the at least one substrate layer including at least one of a honeycomb or lattice structure, a raw product structure, or a fabricated composite structure.

5. The veneer product of any preceding Claim, the at least one substrate layer being fabricated from at least one of a phenolic resin, a raw wood product, or a composite product.

6. The veneer product of any preceding Claim, the at least one thermally-conductive layer including at least one aluminum layer.

7. The veneer product of any preceding Claim, comprising:
at least one adhesive layer positioned between the at least one substrate layer and the at least one thermally-conductive layer.

8. The veneer product of Claim 7, the at least one adhesive layer positioned between the at least one substrate layer and the at least one thermally-conductive layer and the at least one veneer layer being fire retardant.

9. The veneer product of any preceding Claim, the at least one veneer layer being cut from natural lumber.

10. The veneer product of any preceding Claim, the at least one veneer layer being a composite veneer layer fabricated from a mixture including raw wood product and a binder.

11. The veneer product of any preceding Claim, comprising:
at least one adhesive layer positioned between the at least one thermally-conductive layer and the at least one veneer layer.

12. The veneer product of Claim 11, the at least one adhesive layer positioned between the at least one thermally-conductive layer and the at least one veneer layer being fire retardant.

13. The veneer product of any preceding Claim, the at least one coating being transparent.

14. The veneer product of any preceding Claim, the at least one coating including an intumescent material.

15. An aircraft, comprising:
at least one aircraft interior component, the at least one aircraft interior component including a low heat release veneer product, the low heat release veneer product comprising:
at least one substrate layer (120);
at least one thermally-conductive layer (104) disposed on the at least one substrate layer;
at least one veneer layer (108) disposed on the at least one thermally-conductive layer; and
at least one coating disposed on the at least one veneer layer,
one or more of the at least one substrate layer (12), the at least one thermally-conductive layer (104), the at least one veneer layer (108), or the at least one coating being compliant with an OSU 65/65 rate of heat release test.
